# EUROPEAN PATENT SPECIFICATION

(11) **EP 2 090 458 B1**
(45) Date of publication and mention of the grant of the patent: **11.07.2012**
(21) Application number: 08021541.1
(22) Date of filing: 11.12.2008
(51) Int. Cl.: B60N 2/28

(54) **Child seat**
Kindersitz
Siège pour enfant

(30) Priority: 15.02.2008 JP 2008034761
(43) Date of publication of application: 19.08.2009
(73) Proprietor: Takata Corporation, Tokyo 106-8510 (JP)
(72) Inventor: Nakagawa, Osamu, Tokyo 106-8510 (JP); Yoshizumi, Rei, Tokyo 106-8510 (JP); Kawabe, Kenji, Tokyo 106-8510 (JP)
(74) Representative: Banzer, Hans-Jörg

(56) References cited:
- EP-A- 0 328 311
- FR-A- 2 413 896
- JP-A- 2007 145 229

## Description

### Technical Field

The present invention relates to a child seat mounted on a seat of an automobile, and more specifically, it relates to a child seat fixed by a belt of a seatbelt apparatus. In detailed terms, it relates to a child seat having belt insertion openings on left and right side surfaces of a rear portion of the child seat.

### Background Art

Various structures for fixing a child seat mounted on a seat of an automobile to the seat are proposed. As one of them, a structure for fixing a child seat to a seat of an automobile by means of inserting a belt of a seatbelt apparatus into a belt insertion opening provided on left and right side surfaces of a rear portion of the child seat is described in Japanese Unexamined Patent Application Publication No. 2007-145229.

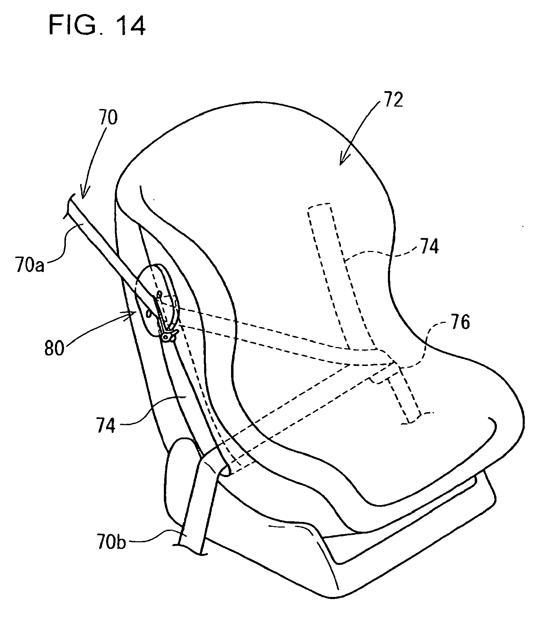

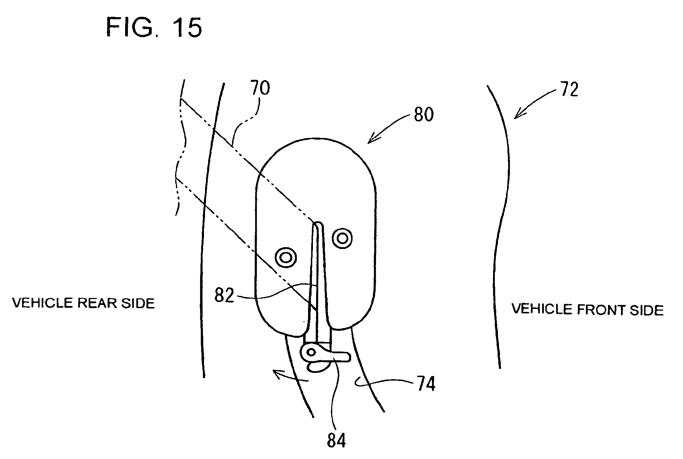

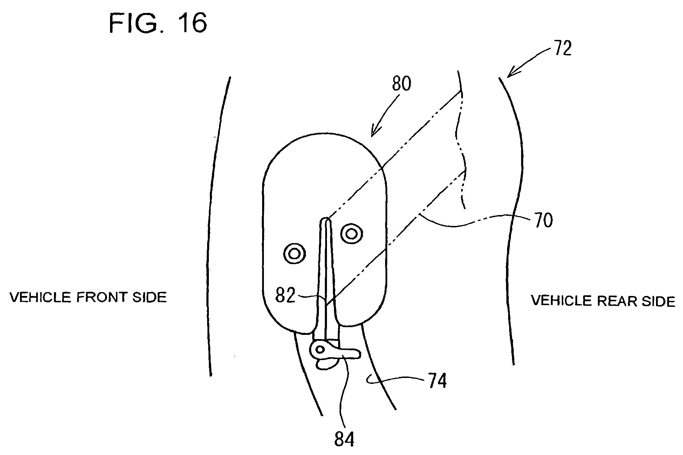

Fig. 14 is a perspective view illustrating a mounting state of a child seat in the same publication, Figs. 15 and 16 are side elevations of the child seat illustrating a belt lock mechanism.

A shoulder belt 70a of a belt 70 that is pulled out from a retractor of the seatbelt apparatus of the automobile reaches a tongue 76 upon passing through a belt insertion opening 74 on the side surface of the rear portion of a child seat 72 and forms a lap belt 70b upon being folded back at the tongue 76. A tip end of the lap belt 70b is fixed to a vehicle body by means of an anchor (illustration is omitted).

A belt-fixing apparatus 80 is mounted on an upper part of the belt insertion opening 74. As illustrated in Figs. 15 and 16, a lever lock 82 for locking the belt 70 is provided in the belt-fixing apparatus 80. A locking state and an unlocking state are switched by means of operating a lock arm 84 in the lever lock 82.

### Disclosure of the Invention

### Problems to be Solved by the Invention

In the aforementioned Japanese Unexamined Patent Application Publication No. 2007-145229, as illustrated in Figs. 14 and 15, the lock arm 84 of the lever lock 82 is not shielded by the belt 70 in a case that the child seat 72 is mounted on a front-facing seat of a vehicle in a manner so as to face a vehicle front side, however, in a case that the child seat is mounted on the same seat in a manner so as to face a vehicle rear side as illustrated in Fig. 16, the lock arm 84 is hard to be operated. This is because the lock arm 84 is positioned below the belt 70, and is shielded by the belt 70.

Furthermore, EP 0 328 311 A2 discloses a child seat with a clamping member being used for fixing the position of a seatbelt at the child seat. The clamping member has a roughened external circular surface and can be snapped over a frame portion of the child seat. The circular surface is eccentric with respect to a circular bore, so that, upon rotation of the clamping member of the frame portion, the circular surface comes into progressive engagement with a corresponding seat belt portion, thereby fixing the position of the seatbelt at the child seat.

An object of the present invention is to provide a child seat capable of solving the above-described hitherto known problems, and easily operating a lock member in either case that the child seat is mounted in a manner so as to face a front side or a rear side.

### Means for Solving the Problems

According to the present invention, this object is achieved by a child seat as defined in claim 1. The dependent claims define preferred and advantageous embodiments of the invention.

According to the present invention a child seat includes vertically long belt insertion openings on left and right side surfaces of a rear part, respectively, and is provided with a lock member for locking a belt in the belt insertion opening, wherein the lock member is provided with a lock plate allowed to be inserted into, and pulled out from the belt insertion opening, and wherein the lock plate includes a first plate surface facing a front side of the child seat, and a second plate surface facing a rear side of the child seat, and wherein the lock plate is allowed to sandwich the belt between any of the plate surfaces and inner surfaces of the belt insertion opening in a state of being inserted into the belt insertion opening.

According to an embodiment the child seat is characterized in that in the child seat a large number of projections is provided on at least one of the plate surface of the lock plate and the inner surface of the belt insertion opening, facing the plate surface.

According to an embodiment of the child seat, a convex ridge, at least a part of which extends in a direction perpendicular to a belt-inserting direction is provided on one of the plate surface of the lock plate and the inner surface of the belt insertion opening, facing the plate surface, and a concave ridge allowing the convex ridge to be engaged with, in a state where the lock plate is inserted into the belt insertion opening is provided on the other of the plate surface of the lock plate and the inner surface of the belt insertion opening, facing the plate surface.

In another embodiment the lock plate is configured such that an upper part thereof is rotatably attached to an upper part of the belt insertion opening, and is configured to be rotatable so as to take either a state in which the lock plate is inserted into the belt insertion opening, or a state in which the lock plate is separated from the belt insertion opening.

According to a further embodiment a rotation-limiting device for limiting the lock plate to be rotated in an inserting direction to the belt insertion opening, and in a separating direction from the belt insertion opening, at a predetermined amount or more is provided.

According to an embodiment of the child seat, the rotation-limiting device is composed of a stopper pin protruded from one of the plate surface of the lock plate, and the inner surface of the belt insertion opening facing the plate surface to the other, and a guide groove provided in the other, and extending in a circular arc manner around an upper part side of the lock plate, serving as a center side of a circle, in which the stopper pin is engaged therewith in a manner so as to be movable in an extending direction thereof, and is constructed such that when the lock plate is rotated up to a predetermined angle in the inserting direction to the belt insertion opening, the stopper pin comes into contact with an end edge of the guide groove, and when the lock plate is rotated up to a predetermined angle in a separating direction from the belt insertion opening, the stopper pin comes into contact with the other end edge of the guide groove.

A lock plate holder may be attached to the upper part of the belt insertion opening, and the lock plate may be constructed such that the upper part thereof is rotatably coupled with the lock plate holder.

In another embodiment the lock plate holders are respectively disposed in the belt insertion openings, and are provided with a first wall portion and a second wall portion respectively facing the first plate surface and the second plate surface when the lock plate is inserted into the belt insertion opening, wherein the lock plate holder is allowed to sandwich the belt between the first plate surface and the first wall portion, and between the second plate surface and the second wall portion, respectively, in a state that the lock plate is inserted into the belt insertion opening.

According to another embodiment the large number of projections is provided on at least one of the plate surface of the lock plate and an inner wall surface of the wall portion of the lock plate holder facing the plate surface.

In a further embodiment the convex ridge is provided on one of the plate surface of the lock plate and the inner wall surface of the wall portion of the lock plate holder facing the plate surface, and the concave ridge is provided on the other.

According to an embodiment the stopper pin is protruded from one of the plate surface of the lock plate and the inner wall surface of the wall portion of the lock plate holder facing the plate surface to the other, and the guide groove is provided on the other to serve as the rotation-limiting device.

### Advantages

The child seat according to the present invention is configured such that the belt inserted into the belt insertion opening is locked by means of sandwiching the belt between the lock plate inserted into the belt insertion opening and the inner surface of the belt insertion opening. The child seat is configured to lock the belt by means of sandwiching the belt between any of the plate surfaces of the lock plate and one of the inner surfaces of the belt insertion opening. Therefore, even in any case of the mounting directions of the child seat of the front-facing and the rear-facing, the belt can be reeved between the plate surface on the vehicle rear side of the lock plate and the inner surface of the belt insertion opening. Accordingly, there is no possibility of that the lock plate is shielded by the belt, and the lock plate can be easily operated.

By means of providing the projection, and the convex ridge and the concave ridge being engaged with each other on the plate surface of the lock plate and the inner surface of the belt insertion opening, facing the plate surface, the frictional latching force for the belt can be raised.

In a case that the lock plate is rotatably installed, the lock plate can be easily inserted into, and pulled out from the belt insertion opening.

An excessive intrusion of the lock plate into the belt insertion opening, and excessive separation of the lock plate from the belt insertion opening can be prevented by means of providing the rotation-limiting device for limiting the lock plate to be rotated in the inserting direction to the belt insertion opening and the separating direction from the belt insertion opening at a predetermined amount or more.

Furthermore, the rotation-limiting device can be simply constructed with the stopper pin and the guide groove.

In the present invention the construction may be made such that the lock plate holder is attached to the upper part of the belt insertion opening and the lock plate is rotatably installed in the child seat body via the lock plate holder.

Further, the construction may be made such that the lock plate holders are respectively disposed in the belt insertion openings, and the first wall portion and the second wall portion respectively facing the first plate surface and the second plate surface of the lock plate when the lock plate is inserted into the belt insertion opening, are provided. In this case, the belt can be sandwiched between the first plate surface and the first wall portion, and between the second plate surface and the second wall portion, respectively, in a state that the lock plate is inserted into the belt insertion opening.

In order to raise the frictional latching force for the belt sandwiched between the plate surface of the lock plate and the inner wall surface of the wall portion, a projection, and a convex ridge and the concave ridge being engaged with each other may be provided on the plate surface of the lock plate and the inner wall surface of the wall portion.

Furthermore, the rotation-limiting device for the lock plate may be constructed such that the stopper pin is protruded from one of the plate surface of the lock plate and the inner wall surface of the wall portion to the other, and the guide groove where the stopper pin is engaged with is provided in the other.

As described above, in a case that the construction is made such that the lock plate is rotatably installed in the child seat body via the lock plate holder, and wall portions respectively facing the plate surfaces of the lock plate are provided in the lock plate holder, and the belt is sandwiched between the plate surface of the lock plate and the wall portion, the projection, and the convex ridge and the concave ridge for raising the frictional latching force for the belt, and the stopper pin or the guide groove constituting the rotation-limiting device for the lock plate can be provided in the wall portion of the lock plate holder, and thereby there is no need to provide these members in the child seat body. Moreover, in a case that these members are worn, it is sufficient that only the lock plate holder is replaced.

### Brief Description of the Drawings

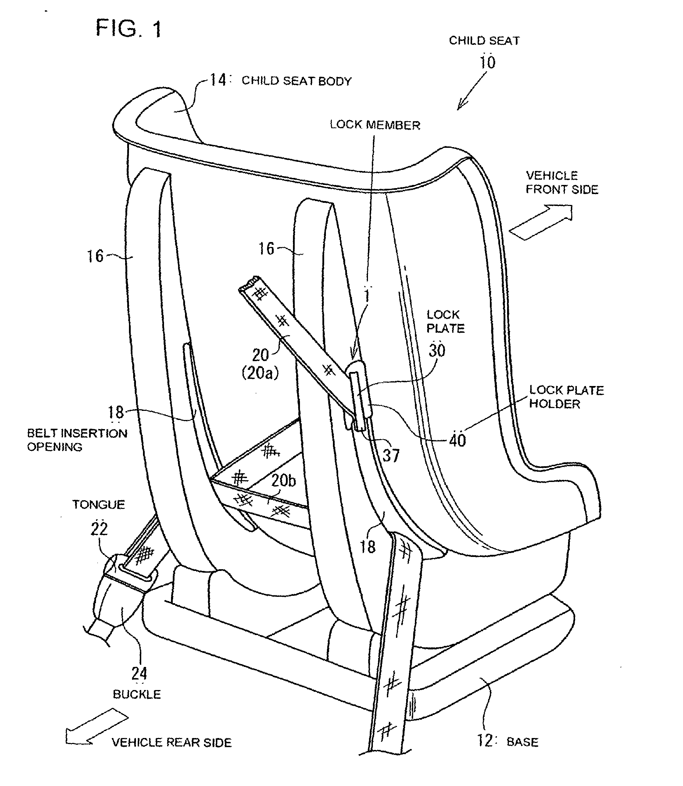

Fig. 1 is a perspective view illustrating a mounting state of a child seat according to an embodiment, which is mounted in a front-facing manner.

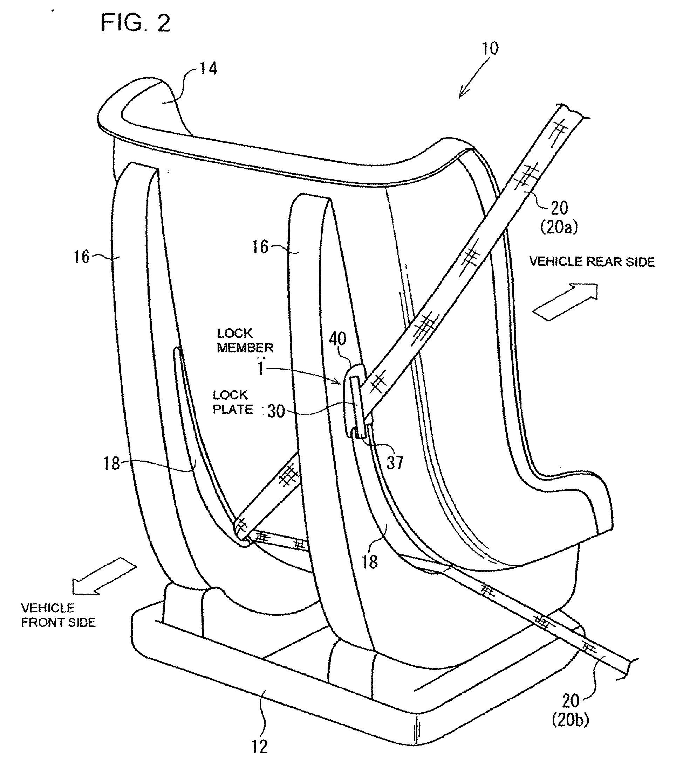

Fig. 2 is a perspective view illustrating a mounting state of the child seat in Fig. 1, which is mounted in a rear-facing manner.

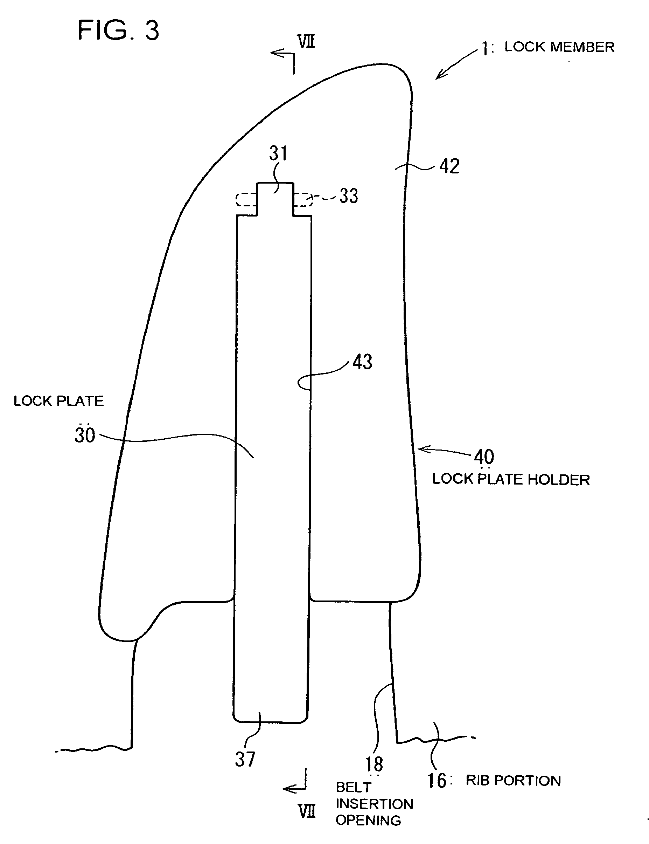

Fig. 3 is a side elevation illustrating a lock member.

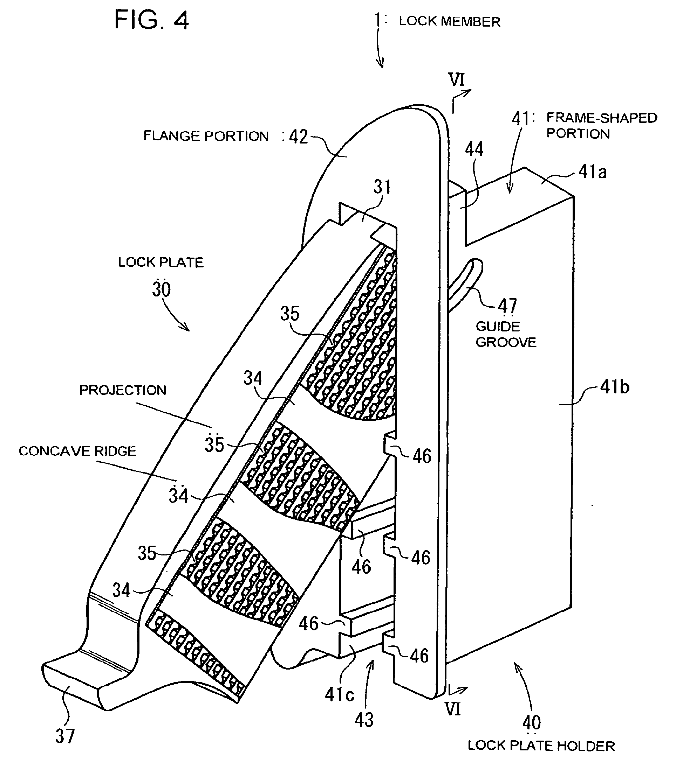

Fig. 4 is a perspective view illustrating the lock member in state that a lock plate is pulled out.

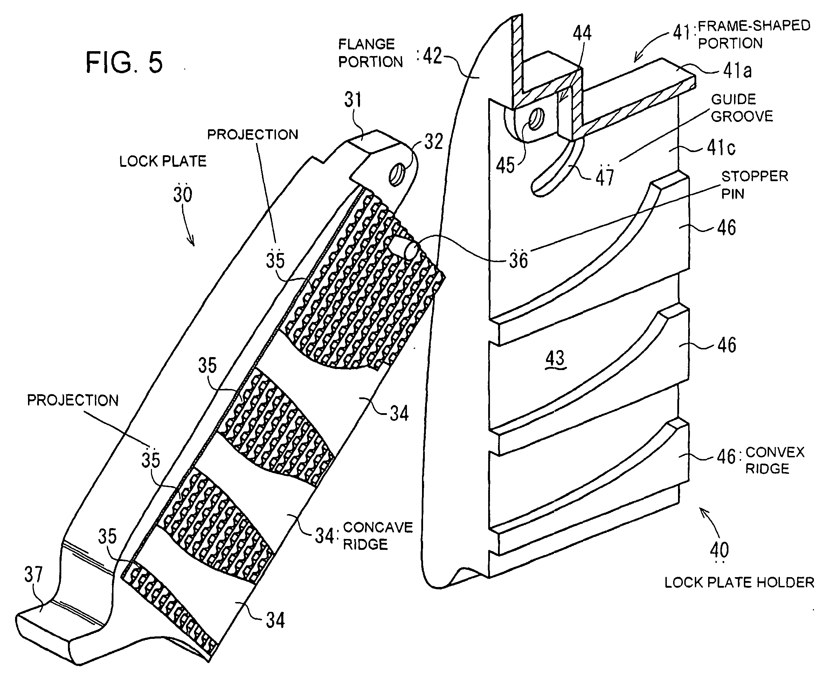

Fig. 5 is an exploded view illustrating the lock member.

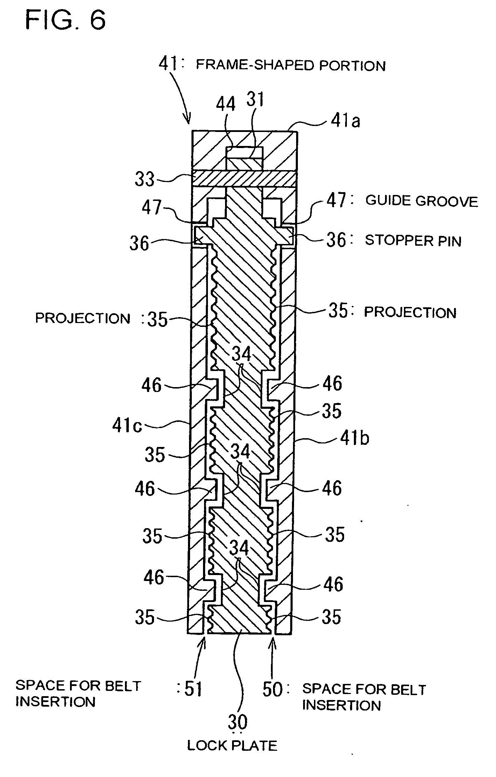

Fig. 6 is a cross-sectional view illustrating the lock member.

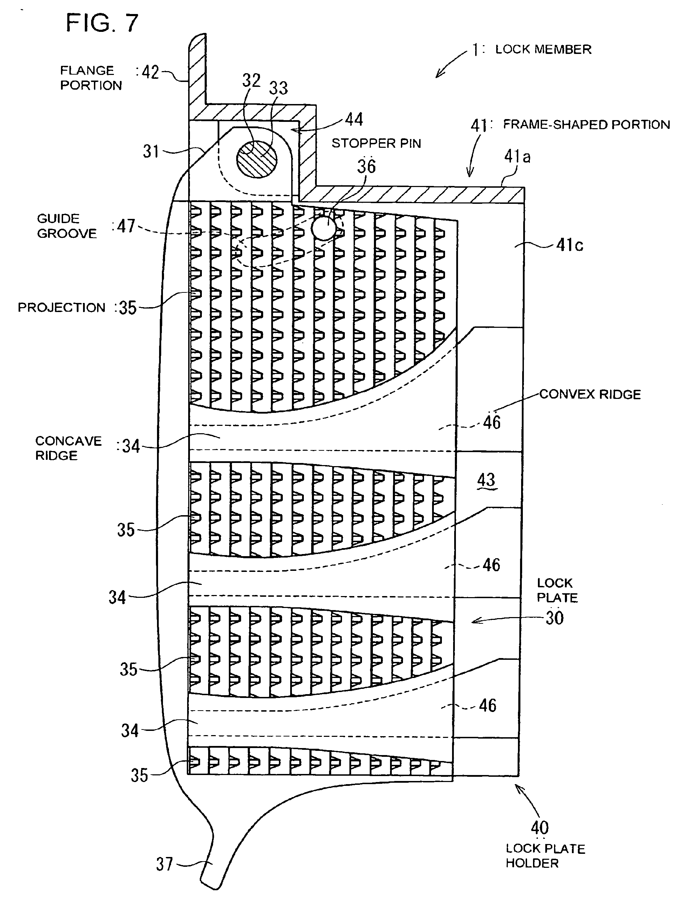

Fig. 7 is a cross-sectional view illustrating the lock member.

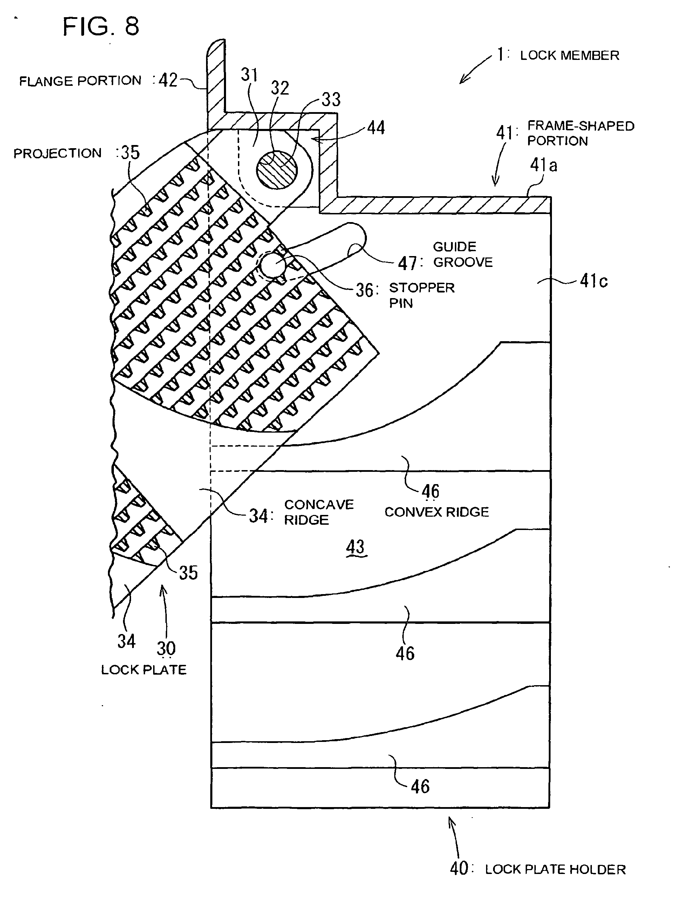

Fig. 8 is a cross-sectional view illustrating the lock member.

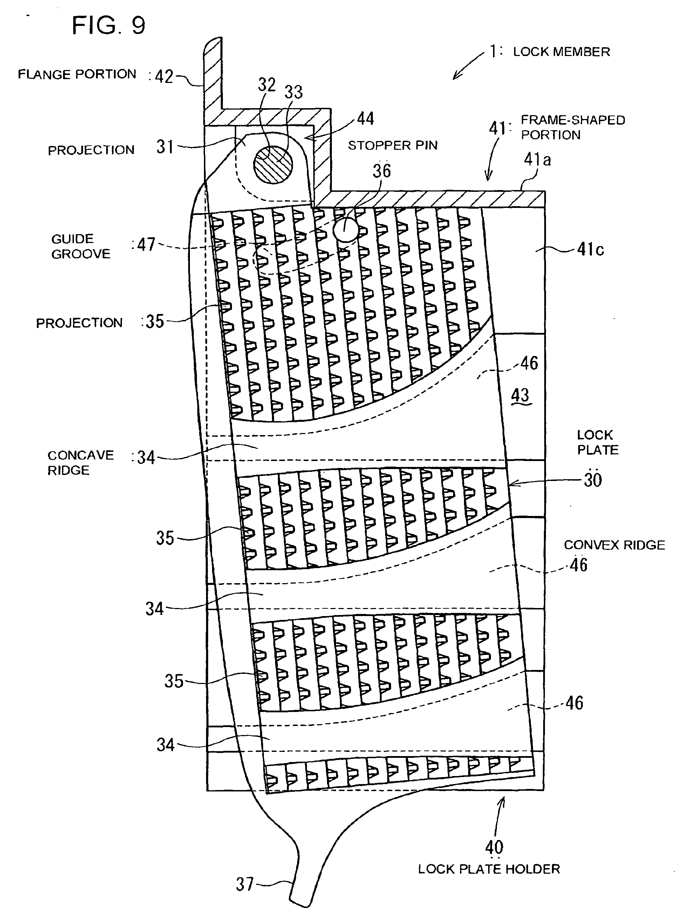

Fig. 9 is a cross-sectional view illustrating the lock member.

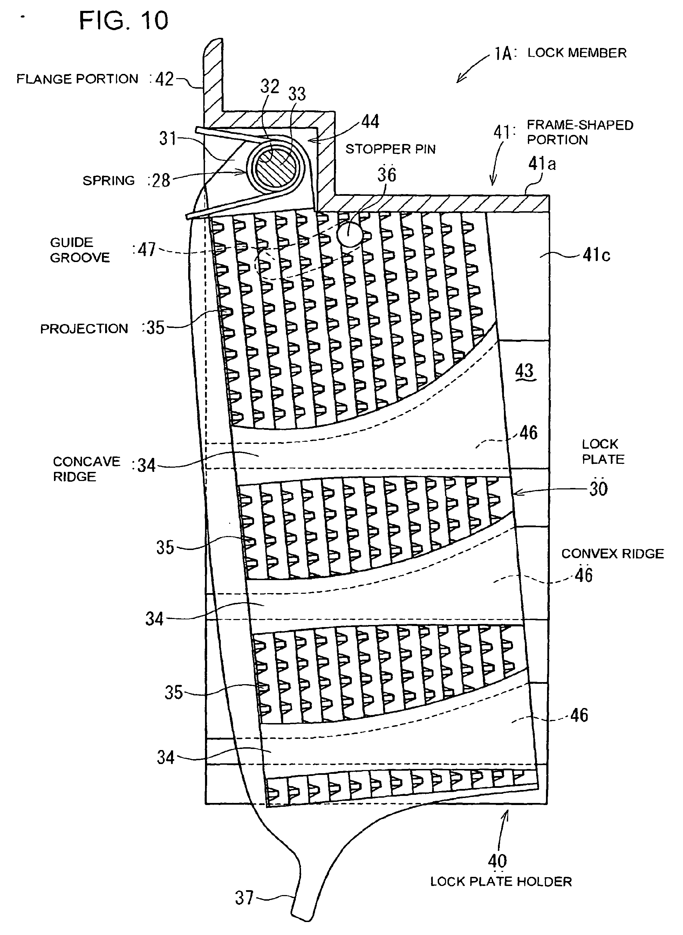

Fig. 10 is a cross-sectional view illustrating the lock member of the child seat according to an embodiment.

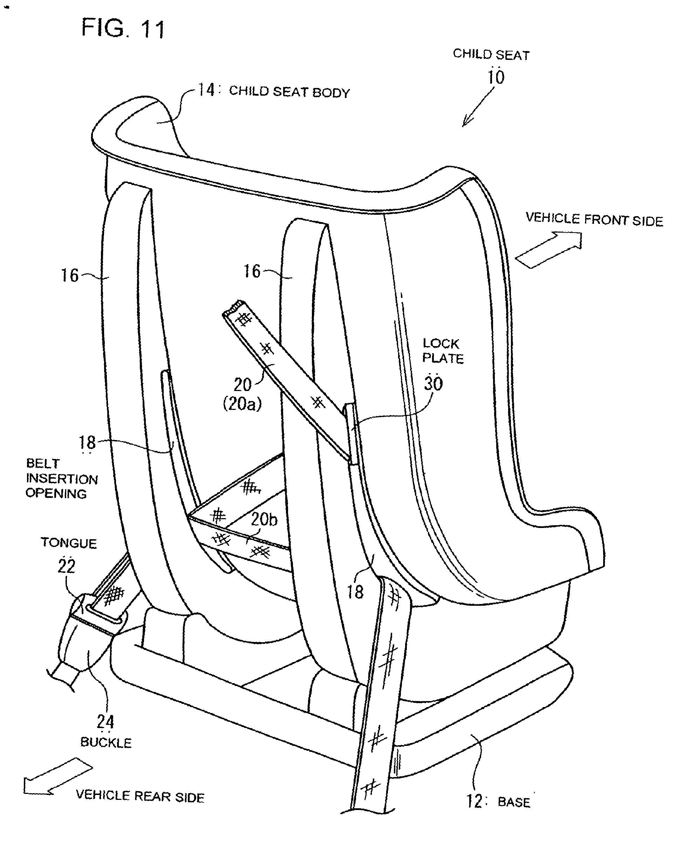

Fig. 11 is a perspective view illustrating a mounting state of the child seat according to the embodiment, which is mounted in the front-facing manner.

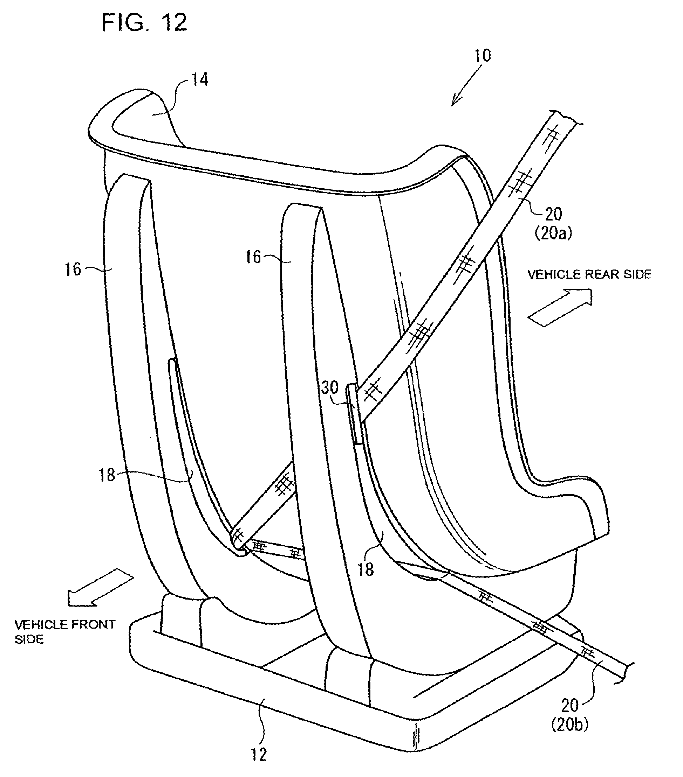

Fig. 12 is a perspective view illustrating the mounting state of the child seat in Fig. 11, which is mounted in the rear-facing manner.

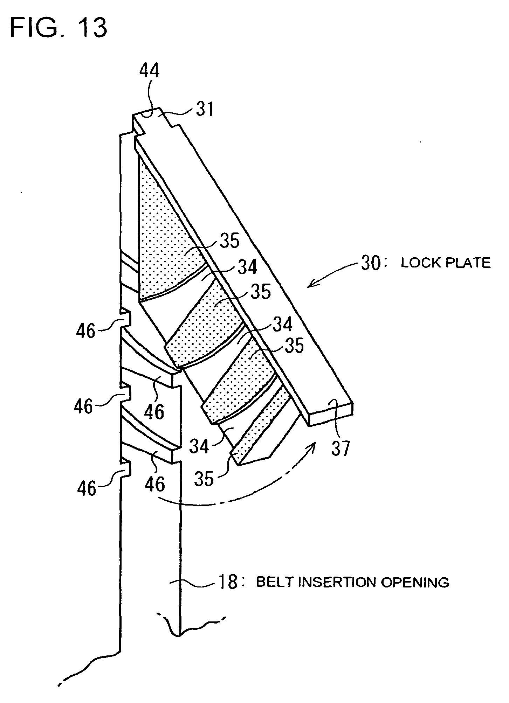

Fig. 13 is a perspective view illustrating the vicinity of a belt insertion opening in a state that the lock plate is pulled out.
Fig. 14 is a perspective view illustrating a hitherto known example.
Fig. 15 is an explanatory view illustrating a mounting state in the hitherto known example.
Fig. 16 is an explanatory view illustrating the mounting state in the hitherto known example.

### Best Mode for Carrying Out the Invention

Hereinbelow, an embodiment will be explained with reference to the drawings.

Fig. 1 and Fig. 2 are perspective views illustrating a child seat according to the embodiment looking from a backside, and Fig. 1 illustrates a state in which the child seat is mounted in a manner so as to face a front side of a vehicle (hereinafter sometimes referred to as a front-facing manner), and Fig. 2 illustrates a state in which the child seat is mounted in a manner so as to face a vehicle rear side (hereinafter sometimes referred to as a rear-facing manner). Fig. 3 is an enlarged side elevation illustrating the vicinity of a lock member of the child seat. Fig. 4 is an enlarged perspective view of the lock member, and illustrates a state in which a lock plate is pulled out. Fig. 5 is an exploded perspective view illustrating the lock member, Fig. 6 is a cross-sectional view illustrating a portion of the lock member along a line VI-VI in Fig. 4, Fig. 7 is a cross-sectional view along a line VII-VII in Fig. 3, Fig. 8 is a cross-sectional view illustrating the same part as that in Fig. 7 at a time when the lock plate is pulled out, and Fig. 9 is a cross-sectional view illustrating the same part as that in Fig. 7 in a state that the lock plate is rotated up to a rotation limit in an inserting direction to a belt insertion opening.

A child seat 10 is provided with a base 12 that is mounted on a seat cushion of an automobile, and a child seat body 14 that is reclinably attached to the base 12. The child seat 10 is configured for an infant to be seated in the child seat body 14.

At both left and right side portions at a back surface of the child seat body 14, rib portions 16 are extended in an upper-and-lower direction. A belt insertion opening 18 formed of a long hole elongated in the upper-and-lower direction is provided in each of the rib portions 16. Each belt insertion opening 18 is provided in a manner so as to penetrate the rib portion 16 in a left-and-right direction of the child seat. The child seat 10 is fixed to a seat by means of a belt (webbing) 20 of a seatbelt apparatus of the automobile that is inserted into and locked on the belt insertion opening 18.

The webbing 20 is inserted into a tongue 22 and the tongue 22 is inserted and coupled with a buckle 24 in a disconnectable manner. A retractor (illustration is omitted) side of a belt 20 forms a shoulder belt 20a and a lap anchor (illustration is omitted) side of the belt 20 forms a lap belt 20b. An end of the lap belt 20b is coupled with a lap anchor of a vehicle body and the seat. Incidentally, in a case that the child seat 10 is fixed to the seat, the tongue 22 is reeved or guided to the belt insertion opening 18 from one side (right side in Figs. 1 and 2) to the other side (left side in Figs. 1 and 2), and is mounted in the buckle 24.

Lock members 1 are respectively provided at upper parts of left and right belt insertion openings 18 so as to lock the belt 20, which is inserted into the belt insertion opening 18.

In this embodiment, the lock member 1 is provided with a lock plate 30 that is inserted into the belt insertion opening 18, and a lock plate holder 40 that is attached to an upper part of the belt insertion opening 18, with which an upper part of the lock plate 30 is rotatably coupled, or the like. In a plate surface of the lock plate 30, a surface viewed in Figs. 4 and 5 forms a first plate surface, and a surface opposite thereto forms a second plate surface.

As illustrated in Fig. 4, in this embodiment, the lock plate holder 40 is provided with a frame-shaped portion 41 disposed in the belt insertion opening 18, and a flange portion 42 protruding from one end side of the frame-shaped portion 41 along a side surface of the rib portion 16 around the belt insertion opening 18, and so forth.

The frame-shaped portion 41 is provided with an upper wall portion 41a that is approximately horizontally disposed at an upper end portion of the belt insertion opening 18, and a front wall portion 41b and a rear wall portion 41c that are lowered from a front edge and a rear edge of the upper wall portion 41a toward a lower side, respectively. The front wall portion 41b and the rear wall portion 41c are extended approximately in parallel with each other while facing each of inner wall surfaces. The front wall portion 41b forms a first wall portion and the rear wall portion 41c forms a second wall portion. A space between each of left and right side edges and a space between respective lower edges of the front wall portion 41b and the rear wall portion 41c are respectively opened in left and right directions and toward a lower side. That is, in this embodiment, the frame-shaped portion 41 is formed to have an approximately C-shape facing downward.

The lock plate 30 is inserted into a space surrounded by the upper wall portion 41a, the front wall portion 41b and the rear wall portion 41c of the frame-shaped portion from a lateral side of the rib portion 16. Hereinbelow, an inside space of the frame-shaped portion 41 is called as a lock plate insertion opening 43. The lock plate insertion opening 43 is allowed to communicate with the belt insertion opening 18 via an opening between each of the lower edges of the front wall portion 41b and the rear wall portion 41c, and the belt 20 (shoulder belt 21a) is configured to be allowed to be inserted into the lock plate insertion opening 43 from an inside of the belt insertion opening 18 through the opening. Incidentally, the lock plate 30 is inserted into the lock plate insertion opening 43 from an outward-facing surface (a surface on a side opposite to a facing surface of each of the rib portions 16 and 16) side of the rib portion 16. Hereinbelow, the outward-facing surface side of the lock plate insertion opening 43 is called as an entrance side, and a side opposite thereto is called as a backside.

The flange 42 is protruded from a side edge of the entrance side of each of the upper wall portion 41a, the front wall portion 41b, and the rear wall portion 41c toward an upper side, a front side, and a rear side, respectively. The flange portion 42 is caused to overlap with the outward-facing surface of the rib portion 16 surrounding a periphery (three sides of upper, front, and rear sides) of the upper part of the belt insertion opening 18, and firmly fixed to the outward-facing surface by means of a firmly fixing device, such as adhesion, welding, or the like.

As illustrated in Fig. 5, an insertion portion 44 where an attaching portion 31 of the lock plate 30, described later, is fitted in is provided at the entrance side of the upper wall portion 41a. The insertion portion 44 is formed of a concave portion that is caved upward from a lower surface of the upper wall portion 41a. A rotatably supporting hole 45 penetrating the insertion portion 44 in a front-and-back direction is provided at each of front and rear wall surfaces of the insertion portion 44.

A plurality of (three ridges in this embodiment) convex ridges 46 extending in the left-and-right direction are respectively provided on the inner wall surface of the front wall portion 41b and the rear wall portion 41c. These convex ridges 46 are disposed in the upper-and-lower direction approximately in parallel with each other while being spaced apart at predetermined intervals. As illustrated in Figs. 5, and 7 through 9, in this embodiment, an upper edge of each of the convex ridges 46 is extending in a circular arc direction around the rotatably supporting hole 45 as an approximately center of a circle, and is curved in such a way that the deeper in the lock plate insertion opening 43, the higher the upper edge of the convex ridge 46. That is, in a state that the shoulder belt 20a is inserted into the lock plate insertion opening 43 as illustrated in Figs. 1 and 2, any of the upper edges of respective convex ridges 46 extends in a direction perpendicular to an extending direction of the shoulder belt 20a.

Incidentally, in this embodiment, a lower edge of each of the convex ridges 46 is formed to extend in an approximately straight line manner in the left-and-right direction. However, the lower edge of each of the convex ridges 46 may also be formed to have a circular arc shape in a similar manner as the upper edge.

As illustrated in Figs. 4, 5, and 7 through 9, guide grooves 47 with which a stopper pin 36, described later, is engaged are provided at respective upper portions of the front wall portion 41b and the rear wall portion 41c. The guide groove 47 also extends in a circular arc direction around the rotatably supporting hole 45 as the approximately center of the circle.

The lock plate 30 has a plate thickness in which a plate surface thereof is allowed to be inserted into the lock plate insertion opening 43 approximately in parallel with the front wall portion 41b and the rear wall portion 41c. The attaching portion 31 to be fitted in the insertion portion 44 of the lock plate holder 40 is protruded from an upper end of the lock plate 30. A rotatably supporting hole 32 penetrating the attaching portion 31 in the front-and-back direction is provided in the attaching portion 31. The lock plate 30 is rotatably supported by the lock plate holder 40 by means of the attaching portion 31 inserted into the insertion portion 44, and a rotatably supporting pin 33 (refer to Figs. 3 and 6) inserted into the rotatably supporting holes 32 and 45. The lock plate 30 is configured to be rotatable around the rotatably supporting pin 33, and is allowed to take either a state in which the lock plate 30 intrudes into the lock plate insertion opening 43 as illustrated in Figs. 1 through 3, 7, and 9, or a state in which the lock plate 30 is pulled out from the lock plate insertion opening 43, as illustrated in Figs. 4 and 8.

On both plate surfaces of the lock plate 30, concave ridges 34 with which respective convex ridges 46 of the front wall portion 41b and the rear wall portion 41c are allowed to be engaged in a state where the lock plate 30 intrudes in the lock plate insertion opening 43 are provided, respectively. On each plate surface of the lock plate 30, the concave ridges 34 in the same number (i.e., three ridges) as that of the convex ridges 46 of each of the front wall portion 41b and the rear wall portion 41c are disposed in a positional relationship of overlapping with the respective convex ridges 46.

As illustrated in Fig. 7, each of the concave ridges 34 extends in the left-and-right direction in a state where the lock plate 30 intrudes in the lock plate insertion opening 43. Further, an upper edge of each of the concave ridges 34 also extends in a circular arc direction around the rotatably supporting hole 45 as an approximately center of a circle, in a similar manner as that of the upper edge of each of the convex ridges 46, and is curved in such a way that the deeper in the lock plate insertion opening 43, the higher the upper edge of the concave ridge 34. That is, in a state that the lock plate 30 is inserted into the lock plate insertion opening 43, the upper edge of each of the concave ridges 34 also extends in a direction perpendicular to an extending direction of the shoulder belt 20a that is inserted into the lock plate insertion opening 43 as illustrated in Fig. 1 and 2. Furthermore, a lower edge of each of the concave ridges 34 also extends in an approximately straight line manner in the left-and-right direction in a similar manner as that of the lower edge of each of the convex ridges 46.

As illustrated in Fig. 6, the plate thickness of a portion other than each of the concave ridges 34 in the lock plate 30 is formed to be slightly smaller than a front-and-back width of the lock plate insertion opening 43, namely a distance between each of the inner wall surfaces of the front wall portion 41b and the rear wall portion 41c, and larger than a distance between each of tip end surfaces of the convex ridges 46 and 46 facing in the front-and-back width direction of the lock plate insertion opening 43. Moreover, a distance between each of bottom surfaces of the concave ridges 34 and 34 facing in a plate thickness direction of the lock plate 30 is formed to be slightly smaller than a distance between each of the tip end surfaces of the convex ridges 46 and 46 facing in the front-and-back direction of the lock plate insertion opening 43. An upper-and-lower width of each of the concave ridges 34 is formed to be slightly larger than the upper-and-lower width of each of the convex ridges 46.

That is, in a state that the lock plate 30 is inserted into the lock plate insertion opening 43 without inserting the shoulder belt 20a into the lock plate insertion opening 43, spaces 50 and 51 for inserting the belt 20 are respectively formed between each of the plate surfaces of the lock plate 30 and each of the inner wall surfaces of the front wall portion 41b and the rear wall portion 41c, and between individual concave ridges 34 and individual convex ridges 46 that are engaged with each other.

As illustrated in Figs. 4 through 9, a large number of minutely small projections 35 is provided in an area except each of the concave ridges 34 in both plate surfaces of the lock plate 30. A tip end of the projection 35 is formed of an acuminate drill shape or a nail shape, and is configured to apply a frictional latching force to the belt 20 by means of digging into a mesh of the belt 20 formed of a woven fabric.

A protruding height of each of the convex ridges 46 from the inner wall surface of each of the front wall portion 41b and the rear wall portion 41c is configured to be larger than a distance from the bottom surface of each of the concave ridges 34 on each plate surface of the lock plate 30 to the tip end in a protruding direction of each of the projections 35. Accordingly, when the belt 20 is inserted into the space 50 or 51, although the lock plate 30 inclines or moves in a direction to narrow a space on a side opposite to a side of a space into which the belt 20 is inserted, a tip end surface of the convex ridge 46 engaged with the concave ridge 34 is brought to a state to come into contact with a bottom surface of the concave ridge 34, before the projections 35 facing the opposite side space comes into contact with the front wall portion 41b or the rear wall portion 41c. Thereby, each of the projections 35 is prevented from being deformed or damaged due to being directly into contact with each of the front wall portion 41b or the rear wall portion 41c.

As illustrated in Fig. 6, respective stopper pins 36 are protruded from upper parts of the respective plate surfaces of the lock plate 30 toward the facing front wall portion 41b and the rear wall portion 41c. The stopper pin 36 is movably engaged with the guide groove 47 of each of the front wall portion 41b and the rear wall portion 41c in an extending direction of the guide groove 47.

The stopper pin 36 and the guide groove 47 are configured in such a way that, as illustrated in Fig. 9, when the lock plate 30 is rotated up to a predetermined angle in a direction to insert the lock plate 30 into the lock plate insertion opening 43, the stopper pin 36 comes into contact with an end edge of the guide groove 47 on the backside of the lock plate insertion opening 43, and the more rotation in the inserting direction is blocked. In addition, as illustrated in Fig. 8, the stopper pin 36 and the guide groove 47 are configured in such a way that, when the lock plate 30 is rotated up to a predetermined angle in a direction to be separated from the lock plate insertion opening 43, the stopper pin 36 comes into contact with an end edge of the guide groove 47 on the entrance side of the lock plate insertion opening 43, and the more rotation in the direction to be separated is blocked. That is, in this embodiment, a rotation-limiting device for limiting a rotation of the lock plate 30 is constructed with the stopper pins 36 and the guide grooves 47.

Incidentally, in this embodiment, as illustrated in Fig. 9, the lock plate 30 is constructed to be allowed to rotate in an inserting direction (hereinafter a direction where the lock plate 30 is inserted into the lock plate insertion opening 43 is sometimes referred to as an inserting direction) until a rear end side of the lock plate 30 in the inserting direction slightly intrudes into the lock plate insertion opening 43. Further, at this moment, an upper end surface of the lock plate 30 is configured to come into contact with a lower surface of the upper wall portion 41a.

In this embodiment, a lower extending portion 37 for hooking a finger when the lock plate 30 is pulled out from the lock plate insertion opening 43 is provided at a lower end side of the lock plate 30.

A procedure for mounting the thus constructed child seat 10 in a passenger seat or a rear seat of the automobile in a manner so as to face a vehicle front side is as follows.

As illustrated in Fig. 1, the tongue 22 is inserted from the belt insertion opening 18 of one side (in this embodiment, the right side in the drawing) to the belt insertion opening 18 of the other side (in this embodiment, the left side in the drawing), and is inserted into the buckle 24 after the child seat 10 is mounted on the seat. Next, after pressing the child seat 10 toward the seat cushion (illustration is omitted) upon pressing the same from above, an upper side of the shoulder belt 20a relative to the child seat 10 is pulled upward, and thereby a strong tension force is applied to the belt 20 between the belt insertion opening 18 (right side) and a belt anchor. Then, the lock plate 30 at the upper part of the belt insertion opening 18 (right side) is pulled out from the lock plate insertion opening 43 as illustrated in Fig. 4, while the shoulder belt 20a continues to be pulled, and the shoulder belt 20a is inserted into the lock plate insertion opening 43. Thereafter, the lock plate 30 is pressed into the lock plate insertion opening 43. Thereby, the shoulder belt 20a is sandwiched between the lock plate 30 and the inner wall surface of the front wall portion 41b or the rear wall portion 41c of the lock plate holder 40, and is brought to a locked state. Thereby, the strong tension force continues to be applied to the belt 20 between the belt insertion opening 18 (right side) and the belt anchor, and the child seat 10 is fixed to the seat.

Incidentally, since the rotation of the lock plate 30 in the inserting direction to the lock plate insertion opening 43 is limited by means of the stopper pin 36 and the guide groove 47 in this embodiment, an entire lock plate 30 is prevented from being deeply pulled backward into the lock plate insertion opening 43 due to a tension force of the belt 20.

In the case that the child seat is mounted in the front-facing manner, as illustrated in Fig. 1, the belt 20 is inserted into the space 51 illustrated in Fig. 6. Although the lock plate 30 inclines or moves in the right direction in Fig. 6 in a manner so as to narrow the space 50 on the opposite side by means of the belt 20 being inserted into the space 51, the belt 20 is strongly sandwiched between the lock plate 30 and the inner wall surface of the rear wall portion 41c by means of the convex ridge 46 coming into contact with the lock plate 30.

As described above, when the lock plate 30 is pressed into the lock plate insertion opening 43, the belt 20 is positioned on a seatback side (vehicle rear side) of the seat relative to the lock plate 30, and the lock plate 30 is not shielded by the belt 20. Accordingly, the pressing work for the lock plate 30 can be easily performed while viewing the lock plate 30. Furthermore, the fact that the lock plate 30 is deeply pressed into the lock plate insertion opening 43 is also easily viewed.

In a case that the child seat 10 is detached from the seat, the lock plate 30 is pulled out from the lock plate insertion opening 43 as illustrated in Fig. 4, and after the tension force of the belt 20 is released, the tongue 22 is separated from the buckle 24, the tongue 22 and the belt 20 are pulled out from each of the belt insertion openings 18, and the belt 20 is separated from the child seat 10. As described above, in the case that the lock plate 30 is pulled out from the lock plate insertion opening 43, the lock plate 30 is not shielded by the belt 20 and therefore the pulling-out work for the lock plate 30 can be performed with ease.

In a case that the child seat 10 is mounted on the seat in the rear-facing manner as illustrated in Fig. 2, the mounting operation of the child seat 10 can also be performed in the same manner as that described above except that the front-and-back direction of the child seat 10 is reversed and that the belt 20 is inserted into the space 50. Moreover, the procedure for detaching the child seat 10 from the seat is the same as that described above.

In this case, as illustrated in Fig. 2, the belt 20 (shoulder belt 20a) is also disposed on the seatback side (vehicle rear side) of the seat relative to the lock plate 30 at the upper part of the belt insertion opening 18, and thereby the lock plate 30 is not shielded by the belt 20 at a time of a pressing-in work and a pulling-out work for the lock plate 30. Therefore, the pressing-in work and the pulling-out work for the lock plate 30 can be performed with ease.

Incidentally, in the aforementioned embodiment, since the projections 35 are provided on each of the plate surfaces of the lock plate 30, and the convex ridge 46 and the concave ridge 34 that extend in the direction perpendicular to a belt-inserting direction, and are engaged with each other, are provided on each of the plate surfaces of the lock plate 30 and the inner wall surface of each of the front wall portion 41b and the rear wall portion 41c facing the respective plate surfaces, a sandwiching force for sandwiching the belt 20 is formed to be high.

Further, since the lock plate 30 is swingably supported by means of the rotatably supporting pin 33, the pressing-in work and the pulling-out work for the lock plate 30 can be performed with ease.

Furthermore, in this embodiment, as illustrated in Figs. 7 through 9, since the lower extending portion 37 is provided in the lock plate 30, the lock plate 30 can be easily pulled out by hooking the finger on the lower extending portion 37 at a time of pulling out the lock plate 30.

Fig. 10 is a longitudinal cross-sectional view illustrating a lock member of a child seat according to another embodiment. Incidentally, Fig. 10 is a cross-sectional view illustrating the same part as that in Figs. 7 through 9.

In the lock member 1A in this embodiment, a spring 28 for biasing the lock plate 30 in the inserting direction to the lock plate insertion opening 43 is provided.

In this embodiment, the spring 28 is composed of a coil portion (numeral is omitted), and a pair of leg-shaped portion (numeral is omitted) extending from both ends of the coil portion in a V-shaped manner. The spring 28 is disposed in such a way that the coil portion surrounds the rotatably supporting pin 33, one of the leg-shaped portions is in contact with a ceiling surface of the insertion portion 44 on the entrance side of the lock plate insertion opening 43 relative to the rotatably supporting pin 33, and the other of the leg-shaped portions is in contact with an upper end surface of the lock plate 30 on the entrance side of the lock plate insertion opening 43 relative to the rotatably supporting pin 33.

The spring 28 is mounted in a state of being compressed in such a way that individual leg-shaped portions approaches each other, and the lock plate 30 is biased to rotate in the inserting direction to the lock plate insertion opening 43 by means of the biasing force in which each of the leg-shaped portions tends to be separated in open legs manner.

Other construction of the lock member 1A is the same as that of the above-described lock member 1 in Figs. 1 through 9, and the same numerals in Fig. 10 as that in Figs. 1 through 9 denote the same elements.

In the lock member 1A, since the lock plate 30 is biased in the inserting direction to the lock plate insertion opening 43 by means of the spring 28, the lock plate 30 is held in a state of being rotated up to the rotation limit in the inserting direction to the lock plate insertion opening 43 by means of the biasing force of the spring 28 when the lock plate 30 is not operated to rotate in a pulling-out direction from the lock plate insertion opening 43. Accordingly, for example, the lock member 1A on opposite side of the lock member 1A locking the belt 20 is prevented from fluttering due to a vibration at a time when the vehicle runs, or the lock plate 30 is prevented from forming an interruption by opening by the own weight, when the child seat 10 is carried.

Incidentally, the construction of the spring 28 that biases the lock plate 30 in the inserting direction to the lock plate insertion opening 43 is not limited thereto.

In each of the aforementioned embodiments, although the lock plate 30 is rotatably attached to the child seat body 14 via the lock plate holder 40, in the present invention, the lock plate 30 may be directly attached to the child seat body 14.

Fig. 11 and Fig. 12 are schematic views illustrating the thus constructed child seat 10 looking from a backside, in which Fig. 11 illustrates the child seat 10 mounted in a front-facing manner, and Fig. 12 illustrates the child seat 10 mounted in a rear-facing manner. Fig. 13 is an enlarged perspective view in the vicinity of a lock member of the child seat 10, illustrating a state in which the lock plate 30 is pulled out.

In this embodiment, the insertion portion 44 formed of a concave portion having a size that allows the attaching portion 31 at an upper part of the lock plate 30, to be fitted is provided at the upper part of the belt insertion opening 18, and the attaching portion 31 is inserted into the insertion portion 44. The lock plate 30 is rotatably supported in the child seat body 14 by a rotatably supporting pin 33 via the rotatably supporting hole 32 of the insertion portion 44. The lock plate 30 is configured to be rotatable around the rotatably supporting pin 33, and is allowed to take either a state in which the lock plate 30 intrudes into the insertion opening 18 as illustrated in Fig. 11, or a state in which the lock plate 30 is pulled out from the insertion opening 18, as illustrated in Fig. 13.

Further, in this embodiment, in an inner wall surface of the belt insertion opening 18, on a portion facing the plate surface of the lock plate 30 that is inserted into the belt insertion opening 18, a plurality of the convex ridges 46 extending in the circular arc direction around the rotatably supporting pin 33 as the center of the circle is provided. Each of the convex ridges 46 extends in a circular arc manner in such a way that the deeper in the belt insertion opening 18, the higher the upper edge of the convex ridge 46. That is, in this embodiment, in a state that the belt 20 is inserted into the belt insertion opening 18 as illustrated in Figs. 11 and 12, any of the respective convex ridges 46 also extends in a direction perpendicular to an extending direction of the belt 20.

Although illustration is omitted, in this embodiment, in a state that the lock plate 30 is inserted into the belt insertion opening 18 without inserting the shoulder belt 20a into the belt insertion opening 18, a space for inserting the belt is also respectively formed between each of the plate surfaces of the lock plate 30 and each of the inner wall surfaces of the belt insertion opening 18 facing therewith, and between the concave ridges 34 and the convex ridges 46 that are engaged with each other.

Other construction of this embodiment is the same as that in the above-described Figs. 1 through 9, and the same numerals in Figs. 11 through 13 as that in Figs. 1 through 9 denote the same elements.

The locking method for the belt 20 (shoulder belt 20a) in this embodiment is the same as that of the embodiment in Figs. 1 through 9, except that the belt 20 is sandwiched between the plate surface of the lock plate 30 on the seatback side (vehicle rear side) of the seat and the inner wall surface of the belt insertion opening 18.

Any of the aforementioned respective embodiments is an example of the present invention, and the present invention can also take aspects other than illustrated. For example, the number of the convex ridges 46 and the concave ridges 34 may be that other than illustrated.

## Claims

1. A child seat including vertically long belt insertion openings (18) on left and right side surfaces of a rear part, respectively, and being provided with a lock member (1) for locking a belt (20) in the belt insertion opening (18),
wherein the lock member (1) is provided with a lock plate (30) allowed to be inserted into, and pulled out from the belt insertion opening (18),
wherein the lock plate (30) includes a first plate surface facing a front side of the child seat, and a second plate surface facing a rear side of the child seat,
wherein the lock plate (30) is allowed to sandwich the belt (20) between any of the plate surfaces and inner surfaces of the belt insertion opening (18) in a state of being inserted into the belt insertion opening (18).

2. The child seat according to Claim 1, wherein a number of projections (35) is provided on at least one of the plate surface of the lock plate (30) and the inner surface of the belt insertion opening (18), facing the plate surface.

3. The child seat according to Claim 1 or 2, wherein a convex ridge (46), at least a part of which extends in a direction perpendicular to a belt-inserting direction is provided on one of the plate surface of the lock plate (30) and the inner surface of the belt insertion opening (18), facing the plate surface, and a concave ridge (34) allowing the convex ridge (46) to be engaged with, in a state where the lock plate (30) is inserted into the belt insertion opening (18) is provided on the other of the plate surface of the lock plate (30) and the inner surface of the belt insertion opening (18), facing the plate surface.

4. The child seat according to any one of Claims 1 through 3, wherein the lock plate (30) is configured such that an upper part of the lock plate (30) is rotatably attached to an upper part of the belt insertion opening (18),and is configured to be rotatable so as to take either a state in which the lock plate (30) is inserted into the belt insertion opening (18), or a state in which the lock plate (30) is separated from the belt insertion opening (18).

5. The child seat according to Claim 4, wherein a rotation-limiting device (36, 47) for limiting the lock plate (30) to be rotated in an inserting direction to the belt insertion opening (18), and in a separating direction from the belt insertion opening (18), at a predetermined amount or more is provided.

6. The child seat according to Claim 5, wherein the rotation-limiting device (36, 47) is composed of a stopper pin (36) protruded from one of the plate surface of the lock plate (30), and the inner surface of the belt insertion opening (18) facing the plate surface to the other, and a guide groove (47) provided in the other, and extending in a circular arc manner around an upper part side of the lock plate (30), serving as a center side of a circle, in which the stopper pin (36) is engaged therewith in a manner so as to be movable in an extending direction thereof, and is constructed such that when the lock plate (30) is rotated toward the belt insertion opening (18) up to a predetermined angle in the inserting direction, the stopper pin (36) comes into contact with an end edge of the guide groove (47), and when the lock plate (30) is rotated from the belt insertion opening (18) up to a predetermined angle in a separating direction, the stopper pin (36) comes into contact with the other end edge of the guide groove (47).

7. The child seat according to any one of Claims 4 through 6, wherein a lock plate holder (40) is attached to the upper part of the belt insertion opening (18), and the lock plate (30) is constructed such that the upper part thereof is rotatably coupled with the lock plate holder (40).

8. The child seat according to Claim 7, wherein the lock plate holders (40) are respectively disposed in the belt insertion openings (18), and are provided with a first wall portion (41b) and a second wall portion (41c) respectively facing the first plate surface and the second plate surface when the lock plate (30) is inserted into the belt insertion opening (18), and wherein the lock plate holder (40) is allowed to sandwich the belt (20) between the first plate surface and the first wall portion (41b), and between the second plate surface and the second wall portion (41c), respectively, in a state that the lock plate (30) is inserted into the belt insertion opening (18).

9. The child seat according to Claim 8, wherein a large number of projections (35) is provided on at least one of the plate surface of the lock plate (30) and an inner wall surface of the wall portion (41b, 41c) of the lock plate holder (40) facing the plate surface.

10. The child seat according to Claim 8 or 9, wherein a convex ridge (46) is provided on one of the plate surface of the lock plate (30) and the inner wall surface of the wall portion (41b, 41c) of the lock plate holder (40) facing the plate surface, and a concave ridge (34) is provided on the other.

11. The child seat according to any one of Claims 8 through 10, wherein a stopper pin (36) is protruded from one of the plate surface of the lock plate (30) and the inner wall surface of the wall portion (41b, 41c) of the lock plate holder (40) facing the plate surface to the other, and a guide groove (47) is provided on the other to serve as the rotation-limiting device.

12. The child seat according to any one of Claims 1 through 11, comprising a biasing means (28) for biasing the lock plate (30) in the inserting direction to the belt insertion opening (18).

## Patentansprüche

1. Kindersitz, welcher vertikale längliche Einführungsöffnungen (18) auf einer linken bzw. rechten Seitenfläche eines rückseitigen Teils aufweist und mit einem Befestigungsteil (1) versehen ist, um einen Gurt (20) in der Einführungsöffnung (18) zu befestigen,
wobei das Befestigungsteil (1) mit einer Befestigungsplatte (30) versehen ist, welche in die Einführungsöffnung (18) eingeführt und aus dieser herausgezogen werden kann,
wobei die Befestigungsplatte (30) eine erste Plattenfläche, welche einer Vorderseite des Kindersitzes gegenüberliegt, und eine zweite Plattenfläche, welche einer Rückseite des Kindersitzes gegenüberliegt, aufweist,
wobei die Befestigungsplatte (30) in der Lage ist, den Gurt (20) zwischen irgendeiner der Plattenflächen und Innenflächen der Gurteinführungsöffnung (18) in einem Zustand, in welchem sie in die Gurteinführungsöffnung (18) eingeführt ist, sandwichartig anzuordnen.

2. Kindersitz nach Anspruch 1, **dadurch gekennzeichnet, dass** eine Anzahl von Vorsprüngen (35) auf der Plattenfläche der Befestigungsplatte (30) und/oder der Innenfläche der Gurteinführungsöffnung (18), welche der Plattenfläche gegenüberliegt, vorhanden ist.

3. Kindersitz nach Anspruch 1 oder 2, **dadurch gekennzeichnet, dass** eine konvexe Rippe, von welcher sich zumindest ein Teil in einer Richtung senkrecht zu einer Guteinführungsrichtung erstreckt, auf der Plattenfläche der Befestigungsplatte (30) oder der Innenfläche der Gurteinführungsöffnung (18), welche der Plattenfläche gegenüberliegt, vorhanden ist, und dass eine konkave Rippe (34), welche mit der konvexen Rippe (46) in einem Zustand, in welchem die Befestigungsplatte (30) in die Gurteinführungsöffnung (18) eingeführt ist, in Eingriff bringbar ist, auf der jeweils anderen der Plattenfläche der Befestigungsplatte (30) oder der Innenfläche der Gurteinführungsöffnung (18), welche der Plattenfläche gegenüberliegt, vorhanden ist.

4. Kindersitz nach einem der Ansprüche 1 bis 3, **dadurch gekennzeichnet, dass** die Befestigungsplatte (30) ausgestaltet ist, so dass ein oberer Teil der Befestigungsplatte (30) drehbar an einem oberen Teil der Gurteinführungsöffnung (18) angebracht ist, und dass sie ausgestaltet ist, um drehbar zu sein, um so entweder einen Zustand, in welchem die Befestigungsplatte (30) in die Gurteinführungsöffnung (18) eingeführt ist, oder einen Zustand, in welchem die Befestigungsplatte (30) von der Gurteinführungsöffnung (18) getrennt ist, anzunehmen.

5. Kindersitz nach Anspruch 4, **dadurch gekennzeichnet, dass** eine Drehbegrenzungsvorrichtung (36, 47) vorhanden ist, um eine Drehung der Befestigungsplatte (30) in eine in die Gurteinführungsöffnung (18) einführende Richtung und in eine von der Gurteinführungsöffnung (18) trennende Richtung in einem vorbestimmten Umfang oder mehr zu beschränken.

6. Kindersitz nach Anspruch 5, **dadurch gekennzeichnet, dass** die Drehbegrenzungsvorrichtung (36, 47) aus einem Stoppstift (36), welcher von der Plattenfläche der Befestigungsplatte (30) oder der Innenfläche der Gurteinführungsöffnung (18), welche der Plattenfläche gegenüberliegt, zu der anderen hervorragt, und einer Führungsvertiefung (47), welche in der anderen vorhanden ist, und sich in der Art eines Kreisbogens um einen oberen Teil einer Seite der Befestigungsplatte (30), welcher als Mittelseite eines Kreises dient, erstreckt, zusammengesetzt ist, wobei sich der Stoppstift (36) in einer Weise damit in Eingriff befindet, um in einer sich erstreckenden Richtung davon bewegbar zu sein, und dass sie ausgestaltet ist, dass, wenn die Befestigungsplatte (30) bis zu einem vorbestimmten Winkel in die einführende Richtung zu der Gurteinführungsöffnung (18) gedreht wird, der Stoppstift (36) in einen Kontakt mit einer Endkante der Führungsvertiefung (47) kommt, und dass, wenn die Befestigungsplatte (30) von der Gurteinführungsöffnung (18) bis zu einem vorbestimmten Winkel in eine trennende Richtung gedreht wird, der Stoppstift (36) in einen Kontakt mit der anderen Endkante der Vertiefung (47) kommt.

7. Kindersitz nach einem der Ansprüche 4 bis 6, **dadurch gekennzeichnet, dass** ein Befestigungsplattenhalter (40) an dem oberen Teil der Gurteinführungsöffnung (18) angebracht ist, und dass die Befestigungsplatte (30) konstruiert ist, so dass der obere Teil davon drehbar mit dem Befestigungsplattenhalter (40) gekoppelt ist.

8. Kindersitz nach Anspruch 7, **dadurch gekennzeichnet, dass** die Befestigungsplattenhalter (40) jeweils in den Gurteinführungsöffnungen (18) angeordnet sind und jeweils mit einem ersten Wandabschnitt (41b) und einem zweiten Wandabschnitt (41 c) versehen sind, welche der ersten Plattenfläche bzw. der zweiten Plattenfläche gegenüberliegen, wenn die Befestigungsplatte (30) in die Gurteinführungsöffnung (18) eingeführt ist, und dass der Befestigungsplattenhalter (40) in der Lage ist, den Gurt (20) zwischen der ersten Plattenfläche und dem ersten Wandabschnitt (41 b) bzw. zwischen der zweiten Plattenfläche und dem zweiten Wandabschnitt (41 c) in einem Zustand, in welchem die Befestigungsplatte (30) in die Gurteinführungsöffnung (18) eingeführt ist, sandwichartig anzuordnen.

9. Kindersitz nach Anspruch 8, **dadurch gekennzeichnet, dass** eine große Anzahl von Vorsprüngen (35) auf der Plattenfläche der Befestigungsplatte (30) und/oder einer Innenwandfläche des Wandabschnitts (41 b, 41 c) des Befestigungsplattenhalters (40), welche der Plattenfläche gegenüberliegt, vorhanden ist.

10. Kindersitz nach Anspruch 8 oder 9, **dadurch gekennzeichnet, dass** eine konvexe Rippe (46) auf der Plattenfläche der Befestigungsplatte (30) oder der Innenwandfläche des Wandabschnitts (41 b, 41 c) des Befestigungsplattenhalters (40), welche der Plattenfläche gegenüberliegt, vorhanden ist, und dass eine konkave Rippe (34) auf der anderen vorhanden ist.

11. Kindersitz nach einem der Ansprüche 8 bis 10, **dadurch gekennzeichnet, dass** ein Stoppstift (36) von der Plattenfläche der Befestigungsplatte (30) oder der Innenwandfläche des Wandabschnitts (41b, 41c) des Befestigungsplattenhalters (40), welche der Plattenfläche gegenüberliegt, zu der anderen hervorragt, und dass eine Führungsvertiefung (47) auf der anderen vorhanden ist, um als die Drehbegrenzungsvorrichtung zu dienen.

12. Kindersitz nach einem der Ansprüche 1 bis 11, umfassend Vorspannmittel (28), um die Befestigungsplatte (30) in der bezüglich der Gurteinführungsöffnung (18) einführenden Richtung vorzuspannen.

## Revendications

1. Siège pour enfant, comprenant des ouvertures d'insertion de sangle longues verticalement (18), sur des surfaces latérales gauche et droite d'une partie arrière, respectivement, et muni d'un organe formant verrou (1), pour verrouiller une sangle (20) dans l'ouverture d'insertion de sangle (18),
dans lequel l'organe formant verrou (1) est muni d'une plaque de verrou (30), pouvant y être insérée, et extraite de l'ouverture d'insertion de sangle (18),
dans lequel la plaque de verrou (30) comprend une première surface de plaque, placée face à un côté avant du siège pour enfant, et une deuxième surface de plaque, placée face à un côté arrière du siège pour enfant,
dans lequel la plaque de verrou (30) peut prendre en sandwich la sangle (20), entre l'une quelconque des surfaces de plaque et des surfaces intérieures de l'ouverture d'insertion de sangle (18), en un état d'insertion dans l'ouverture d'insertion de sangle (18).

2. Siège pour enfant selon la revendication 1, dans lequel une pluralité de saillies (35) sont prévues sur au moins l'une parmi la surface de plaque de la plaque de verrou (30) et la surface intérieure de l'ouverture d'insertion de sangle (18), placée face à la surface de plaque.

3. Siège pour enfant selon la revendication 1 ou 2, dans lequel une nervure convexe (46), dont au moins une partie s'étend dans une direction perpendiculaire à une direction d'insertion de sangle, est prévue sur l'une parmi la surface de plaque de la plaque de verrou (30) et la surface intérieure de l'ouverture d'insertion de sangle (18), placée face à la surface de plaque, et une nervure concave (34), permettant à la nervure convexe (46) d'être mise en prise avec elle, en un état dans lequel la plaque de verrou (30) est inséré dans l'ouverture d'insertion de sangle (18), est prévue sur l'autre de la surface de plaque de la plaque de verrou (30) et la surface intérieure de l'ouverture d'insertion de sangle (18), placée face à la surface de plaque.

4. Siège pour enfant selon l'une quelconque des revendications 1 à 3, dans lequel la plaque de verrou (30) est configurée de manière qu'une partie supérieure de la plaque de verrou (30) soit fixée en rotation à une partie supérieure de l'ouverture d'insertion de sangle (18), et est configuré pour pouvoir tourner, de manière à pouvoir prendre, soit un état dans lequel la plaque de verrou (30) est insérée dans l'ouverture d'insertion de sangle (18), soit un état dans lequel la plaque de verrou (30) est séparée de l'ouverture d'insertion de sangle (18).

5. Siège pour enfant selon la revendication 4, dans lequel un dispositif de limitation de rotation (36, 47), pour limiter la rotation de la plaque de verrou (30) dans un sens d'insertion dans l'ouverture d'insertion de sangle (18), et dans un sens de séparation vis-à-vis de l'ouverture d'insertion de sangle (18), à un degré prédéterminé ou plus, est prévu.

6. Siège pour enfant selon la revendication 5, dans lequel le dispositif de limitation de rotation (36, 47) est composé d'une tige d'arrêt (36) faisant saillie d'une de la surface de plaque de la plaque de verrou (30), et la surface intérieure de l'ouverture d'insertion de sangle (18), placée face à la surface de plaque vers l'autre, et s'étendant à la manière d'un arc de cercle, autour d'un côté de partie supérieure de la plaque de verrou (30), en servant de côté central d'un cercle, dans lequel la tige d'arrêt (36) est mise en prise avec lui, de manière à être déplaçable dans une direction d'extension de celui-ci, et est construit de manière que, lorsque la plaque de verrou (30) est tournée vers l'ouverture d'insertion de sangle (18), jusqu'à un angle prédéterminé dans le sens de l'insertion, la tige d'arrêt (36) vient en contact avec un bord d'extrémité de la rainure de guidage (77) et, lorsque la plaque de verrou (30) est tournée à partir de l'ouverture d'insertion de sangle (18), jusqu'à un angle prédéterminé, dans un sens de séparation, la tige d'arrêt (36) vient en contact avec l'autre bord d'extrémité de la rainure de guidage (47).

7. Siège pour enfant selon l'une quelconque des revendications 4 à 6, dans lequel un organe de maintien de plaque de verrou (40) est attaché à la partie supérieure de l'ouverture d'insertion de sangle (18), et la plaque de verrou (30) est construite de manière que sa partie supérieure soit couplée en rotation à l'organe de maintien de plaque de verrou (40).

8. Siège pour enfant selon la revendication 7, dans lequel les organes de maintien de plaque de verrou (40) sont respectivement disposés dans les ouvertures d'insertion de sangle (18), et sont munis d'une première partie de paroi (41b) et d'une deuxième partie de paroi (41c), respectivement placées face à la première surface de plaque et à la deuxième surface de plaque, lorsque la plaque de verrou (30) est insérée dans l'ouverture d'insertion de sangle (18), et dans lequel l'organe de maintien de plaque de verrou (40) peut prendre en sandwich la sangle (20) entre la première surface de plaque et la première partie de paroi (41b), et entre la deuxième surface de plaque et la deuxième partie de paroi (41c), respectivement, en un état dans lequel la plaque de verrou (30) est insérée dans l'ouverture d'insertion de sangle (18).

9. Siège pour enfant selon la revendication 8, dans lequel un grand nombre de saillies (35) sont prévues sur au moins l'une parmi la surface de plaque de la plaque de verrou (30) et une surface de paroi intérieure de la partie de paroi (41b, 41c) de l'organe de maintien de plaque de verrou (40) placée face à la surface de plaque.

10. Siège pour enfant selon la revendication 8 ou 9, dans lequel une nervure convexe (46) est prévue sur l'une parmi la surface de plaque de la plaque de verrou (30) et la surface de paroi intérieure de la partie de paroi (41b, 41c) de l'organe de maintien de plaque de verrou (40) placée face à la surface de plaque, et une nervure concave (34) est prévue sur l'autre.

11. Siège pour enfant selon l'une quelconque des revendications 8 à 10, dans lequel une tige d'arrêt (36) est placée en saillie à partir de l'une parmi la surface de plaque de la plaque de verrou (30) et la surface de paroi intérieure de la partie de paroi (41b, 41c) de l'organe de maintien de plaque de verrou (40), en regard de la surface de plaque vers l'autre, et une rainure de guidage (47) est prévue sur l'autre, de manière à servir de dispositif de limitation de rotation.

12. Siège pour enfant selon l'une quelconque des revendications 1 à 11, comprenant des moyens de sollicitation (28), pour solliciter la plaque de verrou (30) dans le sens de l'insertion à l'ouverture d'insertion de sangle (18).
